# EUROPEAN PATENT APPLICATION

(11) **EP 3 279 847 A1**
(43) Date of publication of application: **07.02.2018**
(21) Application number: 16182866.0
(22) Date of filing: 04.08.2016
(51) Int. Cl.: G06Q 20/32, G06Q 20/40, G06Q 20/26

(54) **MOBILE PUSH PAYMENTS**

(71) Applicant: Mastercard International Incorporated, New York, NY 10577 (US)
(72) Inventor: Meaney, Andrew, K., Connecticut 06878 (US); Deniz, Shane, Lansley, Jorge, PO Box 500003 Dubai (IN); Shah, Gaurang, 400007 Mumbai (IN); Asthaana, Pankaj, Uttar Pradesh (IN)
(74) Representative: Gill Jennings & Every LLP

(57) **Abstract**

There is described herein a method of conducting a mobile transaction, comprising: a card processor server receiving an authorisation message from an application programming interface (API) running on a sending institution server, the authorisation message comprising a push code indicating that the transaction should be processed immediately; and the card processor server transmitting a guarantee message to an API running on a receiving institution server, the guarantee message comprising an urgency code indicating that funds should be posted to a merchant's account immediately. There is further described a system comprising a card processor server, an API running on a sending institution server, an API running on a receiving institution server, a consumer mobile user device and a merchant user device, the card processor server being configured to perform the aforementioned method.

## Description

The present disclosure relates to methods and systems for conducting mobile transactions. More specifically, the mobile transactions are so-called "push" transactions, initiated by the paying party (consumer).

In many economies, credit and debit card payments have been used side by side with cash transactions for several decades. Over recent years, payment with mobile user devices such as smartphones, tablets and smartwatches has also become familiar to many consumers, especially in cities.

However, there are some parts of the world where cash payments are still used almost exclusively. This may be due to lack of card payment infrastructure or insufficient numbers of the population holding bank accounts, amongst other reasons, e.g. in rural economies and remote locations. In such locations, it is predicted that there will soon be more people with mobile phones than with bank accounts. Mobile payment systems have therefore been developed which allow consumers in those regions to initiate transactions from their own pre-paid accounts to a merchant's pre-paid account, in a manner which is more "cash-like" than traditional card payment systems. This can reduce the risk of (potentially violent) theft, and loss, posed to consumers and merchants as a result of respectively carrying and holding cash.

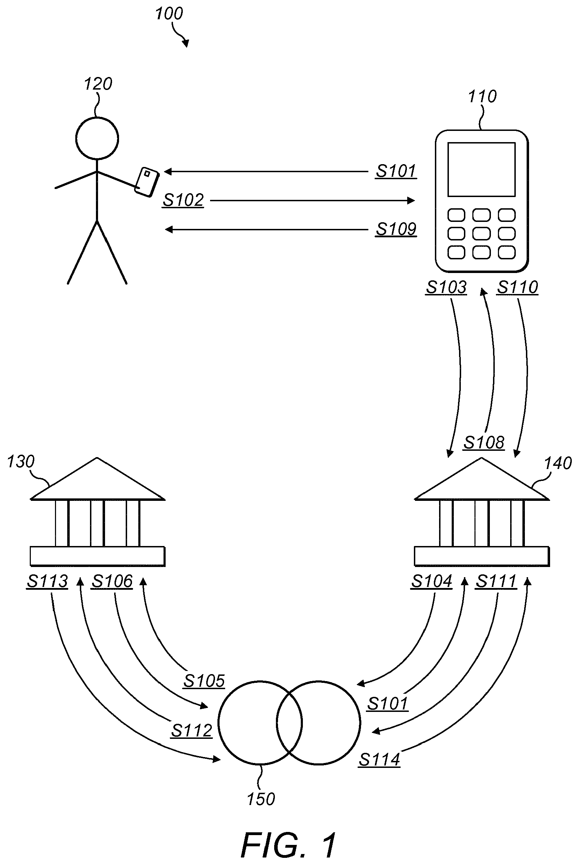

Traditional card payment systems are based on a "pull", originated by the merchant, from the consumer's account as illustrated in the schematic of a typical card payment system 100, shown in Figure 1.

At step S101, the merchant sets up the payment request on their point of sale (POS) device 110 (or this may be done automatically at a virtual POS on the merchant's server for online transactions) and requests card details from the consumer 120. At S102, the consumer 120 then supplies their card details, e.g. by physically inserting their card into a chip-and-PIN POS, tapping it on a contactless (e.g. near field communication, NFC) reader, entering their details into a form on a webpage or app (e.g. on a fixed or mobile user device), or by tapping their payment-enabled mobile user device (which stores their card details or a means of accessing them) on a contactless reader.

At S103 to S105 the POS 110 then communicates an authorisation request to the consumer's bank (known as the card issuer) 130, via the merchant's bank (known as the acquirer) 140 and card processor 150 (which maintains relationships with most banks). If there are sufficient funds then, at S106 to S107, the issuer 130 informs the acquirer 140 that the transaction has been authorised, via card processor 150. The acquirer 140 treats this as a guarantee that payment will be made and, at S108, sends an approval message to the merchant's POS 110. In response to this, at S109 the merchant provides the requested goods or services, and/or a receipt.

The actual payment of funds and adjustment of balances in consumer and merchant accounts at the issuer and merchant banks respectively, known as settlement, occurs later. Typically this starts with an end of day review of all credits, debits and voids involving the issuer 130 at the merchant POS 110. Settlement of the net amount is then requested from the issuer 130 via the acquirer 140 and card processor 150 at S110 to S112. A batch payment from issuer 130 to acquirer 140 via the card processor 150 follows at S113 to S114, usually within one or two working days.

In general, if steps S1 to S10 occur on day D, the soonest that steps S111 to S114 can occur, and thus that funds from the transaction are made available for use by the merchant, is day D + 1.

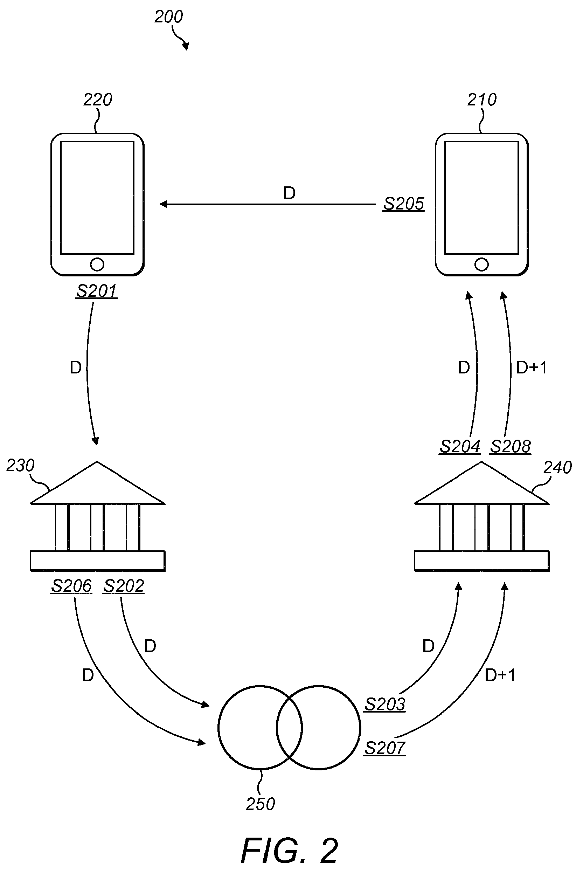

Existing face-to-face mobile push payment systems are based on similar infrastructure. An example of such a system 200 is illustrated schematically in Figure 2.

At S201, a consumer initiates a push payment to a merchant by sending a transaction request from consumer mobile user device 220 to issuer 230. If sufficient funds are available in the consumer's account, the issuer 230 sends an authorisation message to acquirer 240 via card processor 250 at S202 to S203. The acquirer 240 then sends an approval notification to the merchant's mobile user device 210 at S204, prompting the merchant to provide the consumer with the requested goods or services at S205.

Subsequently, typically at the end of the day, issuer 230 sends a batch payment for acquirer 240 to card processor 250 at S206. The card processor 250 subsequently, typically at the end of the following day, passes this on to acquirer 240 at S207. Finally, at S208, acquirer 240 posts funds to the merchant's account. The merchant therefore does not receive funds until after providing their goods or services to the consumer, with the lag time generally being at least one working day.

According to a first aspect, there is provided a method of conducting a mobile transaction, comprising: a card processor server receiving an authorisation message from an application programming interface (API) running on a sending institution server, the authorisation message comprising a push code indicating that the transaction should be processed immediately; and the card processor server transmitting a guarantee message to an API running on a receiving institution server, the guarantee message comprising an urgency code indicating that funds should be posted to a merchant's account immediately.

The method could further comprise the card processor server transmitting a funding request message to the API running on the sending institution server.

The method could further comprise, prior to receipt of the authorisation message: a consumer mobile user device scanning a quick response (QR) code. The consumer mobile user device could extract data from the scanned QR code, comprising a transaction type indicator specifying mobile push payment and a merchant account identifier. The consumer mobile user device could receive a transaction amount input. The consumer mobile user device could transmit a transaction request message to the API running on a sending institution server, the transaction request message comprising the transaction type indicator, the merchant account identifier and the transaction amount.

The transaction amount input could comprise data extracted from the scanned QR code. The transaction amount input could alternatively or additionally comprise and input from a user interface device.

The method could further comprise the API running on the receiving institution server, in response to receiving the guarantee message, posting funds to the merchant's account.

The method could further comprise the API running on the receiving institution server, in parallel with posting of the funds to the merchant's account, issuing a funds posted notification message to a merchant user device registered with the API running on the receiving institution server as linked to the merchant's account.

The method could further comprise the merchant user device receiving the funds posted notification message. The method could further comprise the merchant user device, by means of a user interface, alerting the merchant that the transaction has been processed.

The method could further comprise the API running on the receiving institution server, in parallel with posting of the funds to the merchant's account, issuing a merchant paid notification message to the API running on the sending institution server, via the card processor server.

The method could further comprise the API running on the sending institution server, in response to receiving the merchant paid notification message, transmitting a payment made notification message to a consumer mobile user device which initiated the transaction.

The method could further comprise the consumer mobile user device receiving the payment made notification message. The method could further comprise the consumer mobile user device, by means of a user interface, alerting the consumer that the transaction has been processed.

The method could further comprise the API running on the sending institution server receiving a transaction request message from a consumer mobile user device. The method could further comprise the API running on the sending institution server, responsive thereto, transmitting the authorisation message to the card processor server.

The method could further comprise the API running on the sending institution server sending funds to the receiving institution via the card processor.

According to a second aspect there is provided a system comprising a card processor server, an API running on a sending institution server, an API running on a receiving institution server, a consumer mobile user device and a merchant user device, the system being configured to perform the method of the first aspect.

According to a third aspect there is provided a card processor server comprising: a memory; a receiver configured to receive an authorisation message from an API running on a sending institution server, the authorisation message comprising a push code indicating that the transaction should be processed immediately; a processor in communication with the receiver and the memory and configured to execute instructions stored on the memory in order to recognise the push code and, responsive thereto, prepare a guarantee message comprising an urgency code indicating that funds should be posted to a merchant's account immediately; and a transmitter in communication with the processor and configured to, under the processor's control, transmit the guarantee message to an API running on a receiving institution server.

Aspects of the present invention will now be described by way of example with reference to the accompanying figures. In the figures:
Figure 1 schematically illustrates a typical card payment system;
Figure 2 illustrates an example face-to-face mobile push payment system; and
Figure 3 illustrates an example payment system which may be used for mobile push payments.

The following description is presented to enable any person skilled in the art to make and use the system, and is provided in the context of a particular application. Various modifications to the disclosed embodiments will be readily apparent to those skilled in the art.

The present inventors have recognised that mobile push payments can be effected faster and more efficiently by including certain codes in messages sent between the various parties.

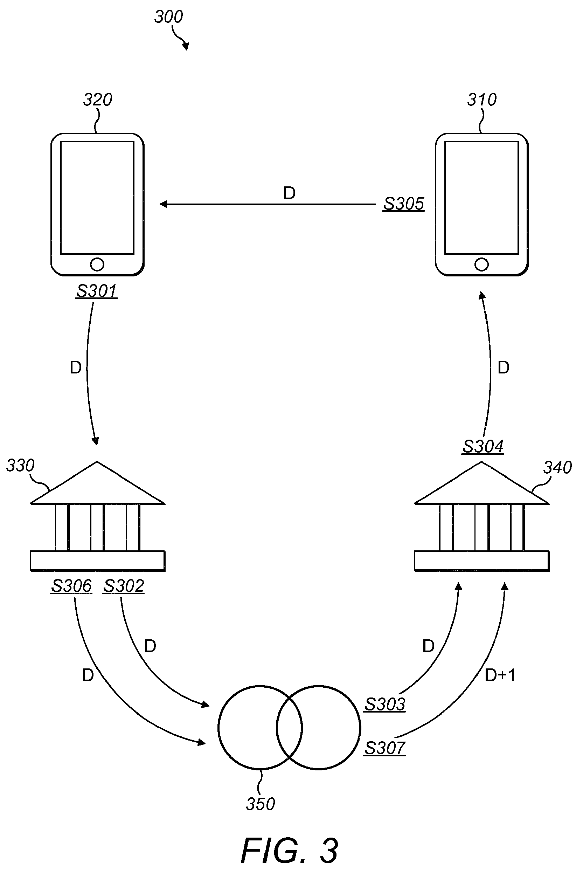

Figure 3 illustrates an example payment system 300 which may be used for such mobile push payments. In this example system, the consumer holds mobile user device 320, linked to an account (e.g. a prepaid account) at a sending institution. Consumer mobile user device 320 communicates with sending institution server 330, e.g. via a mobile app. Similarly, the merchant holds mobile user device 310, linked to an account (e.g. a prepaid account) at a receiving institution. Merchant mobile user device 310 communicates with receiving institution server 340, e.g. via a mobile app. Sending and receiving institution servers 330 and 340 each communicate with card processor server 350 via application programming interfaces (APIs).

At S301, a consumer initiates a push payment to a merchant by sending a transaction request from consumer mobile user device 320 to sending institution server 330. If sufficient funds are available in the consumer's account, the sending institution server 330 sends an authorisation message comprising a push code, indicating that the transaction should be processed immediately, to card processor server 350 at S302. The card processor server 350 then transmits a guarantee message comprising an urgency code, indicating that funds should be posted to the merchant's account immediately, to the receiving institution server. On receipt of the guarantee message, the receiving institution immediately posts funds to the merchant's account and receiving institution server 340 sends a funds posted notification to the merchant's mobile user device 310 at S304. This prompts the merchant to provide the consumer with the requested goods or services at S305.

Subsequently, typically at the end of the day, sending institution server 330 sends a batch payment for the receiving institution to card processor server 350 at S306. The card processor server 350 subsequently, typically at the end of the following day, passes this on to the receiving institution at S307.

The transaction therefore proceeds in a cash-like manner from the point of view of the merchant. They can proceed to provide goods/services to the consumer without risking payment later failing, and they have immediate access to the resulting funds. From their point of view, the process is completed sooner.

Only one notification needs to be sent from the receiving institution server to the merchant mobile user device. Thus, system resource usage is reduced, including communication network bandwidth usage and processing power.

The transaction request sent by the consumer mobile user device can include, for example, a merchant account identifier and a transaction value. These could both be entered manually by the consumer. Alternatively, the merchant could have a barcode or quick response (QR) code displayed on their premises, for example, on their counter, which the consumer can scan with their mobile user device to auto-populate the merchant account identifier. For many merchants this may be preferable to keeping an electronic POS device, which requires staff training and maintenance and takes up counter space, and which they may only be given access to if they pass stringent know your customer (KYC) and credit rating checks. Alternatively or additionally, individual items for sale in the merchant's premises could bear barcodes or QR codes which the consumer can scan with their mobile user device to auto-populate the transaction value. In some examples, both the transaction value and the merchant account identified could be auto-populated by scanning of a barcode or QR code on an item to be purchased.

Barcodes or QR codes as described above could directly contain the data to be auto-populated. Alternatively, they could contain data required to remotely access the data to be auto-populated from an external database, e.g. a web address.

In some circumstances, the consumer might be provided with the opportunity to add further details to the transaction request. For example, they might be able to manually add a tip amount to be added into the transaction value together with a bill value, e.g. where the merchant is a restaurant or taxi service.

Optionally, once funds are posted to the merchant account, messages can be sent back through the payment system to result in notification to the consumer that the merchant has been paid. This can be useful for example in a restaurant where this notification can alert the consumer that they can leave the premises.

Optionally, the card processor server can send a funding request message to the sending institution server to ensure funds are transmitted as soon as possible.

In one example system, items to be sold could carry OR codes containing the following data.
1. Merchant ID Type - this field will contain the tag indicating the card processor, merchant's mobile phone number or bank account number, etc.
2. Merchant ID - this field will contain the 15-digit merchant PAN or token with the receiving institution ID, indicated in the first 6 digits of the BIN, to allow for routing of the transaction to the merchant, with the remaining 9 digits as part of the merchant PAN. The check digit of the Merchant PAN will be calculated by the sending institution. This could also contain merchant's mobile number or bank account number.
3. Merchant Name -to identify the name of the merchant to facilitate cardholder's reconciliation.
4. MCC Code - the merchant's activity / business type can be classified in this field.
5. Merchant City - merchant city / location is defined in this field.
6. Country Code - merchant country is defined in this field.
7. Merchant Currency - the merchant's transaction currency is indicated in this field.
8. Transaction Amount (specific to dynamic QR code generation)
9. Tip amount - tied to particular MCC code(s)
10. Invoice/bill number - to enable dynamic QR code-related use cases, including restaurant, utility bill use cases, etc.
11. Merchant Postal Code
12. Secondary ID - placeholder for additional needed data elements

In one example system, the card processor server receives a message including a transaction type indicator with the following subfields.
1. DE 3 Subfield 1 (Processing Code) = 28 - Payment to transaction
2. DE 3 Subfield 2 (Cardholder "From Account Type" Code) = 00 - Not Specified or not applicable
3. DE 3 Subfield 3 (Cardholder "To Account Type" Code) = 00 - Not Specified or not applicable
4. DE 18 (Merchant Type) = 6536 - MoneySend Intracountry & 6537 MoneySend Intercountry
5. DE 22 (Point of Service Entry Mode) Subfield 1 (PAN Entry Mode) = 01- PAN Manual Entry
6. DE 48 (Additional Data) Sub-element 77 (Funding /Payment Transaction Type Indicator) = Any of the values ranging from C57 - C66 can be used as a push code to denote an Immediate Mobile Push Payment transaction to the merchant
7. DE 61 (POS Data) Subfield 5 (POS Card Presence Indicator) = 1 Card not present

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

## Claims

1. A method of conducting a mobile transaction, comprising:
a card processor server receiving an authorisation message from an application programming interface (API) running on a sending institution server, the authorisation message comprising a push code indicating that the transaction should be processed immediately; and
the card processor server transmitting a guarantee message to an API running on a receiving institution server, the guarantee message comprising an urgency code indicating that funds should be posted to a merchant's account immediately.

2. The method of claim 1, further comprising the card processor server transmitting a funding request message to the API running on the sending institution server.

3. The method of either of claims 1 or 2, further comprising, prior to receipt of the authorisation message:
a consumer mobile user device scanning a quick response (QR) code;
the consumer mobile user device extracting data from the scanned QR code, comprising a transaction type indicator specifying mobile push payment and a merchant account identifier;
the consumer mobile user device receiving a transaction amount input; and
the consumer mobile user device transmitting a transaction request message to the API running on a sending institution server, the transaction request message comprising the transaction type indicator, the merchant account identifier and the transaction amount.

4. The method of claim 3, wherein the transaction amount input comprises one or both of data extracted from the scanned QR code and input from a user interface device.

5. The method of any preceding claim, further comprising the API running on the receiving institution server, in response to receiving the guarantee message, posting funds to the merchant's account.

6. The method of claim 5, further comprising the API running on the receiving institution server, in parallel with posting of the funds to the merchant's account, issuing a funds posted notification message to a merchant user device registered with the API running on the receiving institution server as linked to the merchant's account.

7. The method of claim 6, further comprising the merchant user device:
receiving the funds posted notification message; and
by means of a user interface, alerting the merchant that the transaction has been processed.

8. The method of any of claims 5 to 7, further comprising the API running on the receiving institution server, in parallel with posting of the funds to the merchant's account, issuing a merchant paid notification message to the API running on the sending institution server, via the card processor server.

9. The method of claim 8, further comprising the API running on the sending institution server, in response to receiving the merchant paid notification message, transmitting a payment made notification message to a consumer mobile user device which initiated the transaction.

10. The method of claim 9, further comprising the consumer mobile user device:
receiving the payment made notification message; and
by means of a user interface, alerting the consumer that the transaction has been processed.

11. The method of any preceding claim, further comprising the API running on the sending institution server:
receiving a transaction request message from a consumer mobile user device; and
responsive thereto, transmitting the authorisation message to the card processor server.

12. The method of any preceding claim, further comprising the API running on the sending institution server sending funds to the receiving institution via the card processor.

13. A system comprising a card processor server, an API running on a sending institution server, an API running on a receiving institution server, a consumer mobile user device and a merchant user device, the system being configured to perform the method of any preceding claim.

14. A card processor server comprising:
a memory;
a receiver configured to receive an authorisation message from an application programming interface (API) running on a sending institution server, the authorisation message comprising a push code indicating that the transaction should be processed immediately;
a processor in communication with the receiver and the memory and configured to execute instructions stored on the memory in order to recognise the push code and, responsive thereto, prepare a guarantee message comprising an urgency code indicating that funds should be posted to a merchant's account immediately; and
a transmitter in communication with the processor and configured to, under the processor's control, transmit the guarantee message to an API running on a receiving institution server.
